# FASCICULE DE BREVET EUROPEEN

(11) **EP 1 191 997 B1**
(45) Date de publication et mention de la délivrance du brevet: **11.08.2004**
(21) Numéro de dépôt: 00922760.4
(22) Date de dépôt: 26.04.2000
(51) Int. Cl.: B01F 17/00

(54) **COMPOSITION SOLIDE COMPRENANT AU MOINS UN TENSIOACTIF A BAS POINT DE FUSION**
FESTE ZUSAMMENSETZUNG MIT WENIGSTENS EINEM NIEDRIGSCHMELZENDENTENSID
SOLID COMPOSITION CONTAINING AT LEAST ONE SURFACTANT WITH A LOW MELTING POINT

(30) Priorité: 26.04.1999 FR 9905247
(43) Date de publication de la demande: 03.04.2002
(73) Titulaire: RHODIA CHIMIE, 92408 Courbevoie Cédex (FR)
(72) Inventeur: HECAEN, Jean-Pierre, 93240 Stains (FR); TAISNE, Laurent, F-75018 Paris (FR)
(74) Mandataire: Boittiaux, Vincent
(86) Numéro de dépôt international: PCT/FR2000/001111
(87) Numéro de publication internationale: WO 2000/064571

(56) Documents cités:
- WO-A-93/23022
- WO-A-97/06307
- US-A- 4 508 705

## Description

La présente invention a pour objet une composition se présentant sous une forme solide, comprenant au moins un tensioactif à bas point de fusion, son procédé de préparation et son utilisation.

Il est intéressant dans bon nombre de domaines, de pouvoir disposer de tensioactifs se présentant sous une forme solide, de manière à être en mesure, par exemple, de les incorporer dans des formulations solides. Une telle mise en forme facilite en effet l'utilisation du tensioactif. Cependant, beaucoup de tensioactifs ne se prêtent pas à ce genre de mise en oeuvre du fait qu'ils se présentent sous une forme liquide à température relativement faible.

Une possibilité de remédier à l'incompatibilité des tensioactifs liquides et des formulations solides, consiste à absorber ledit tensioactif sur un support, tel que la silice par exemple. Malheureusement, la silice ne peut pas toujours être mise en oeuvre dans tous les domaines, comme celui des formulations agrochimiques par exemple. En effet, la silice n'est pas soluble dans les solutions aqueuses et a tendance à floculer, ce qui peut entraîner des bouchages des appareils utilisés pour appliquer la formulation comprenant le tensioactif. Le document WO-A-9706307 décrit des compositions comprenant un tensio-actif ayant un point de fusion aussi bas que 35°C et des polymères polyol-polyester.

L'un des buts de l'invention est de proposer une mise en forme solide de tensioactifs à bas point de fusion ne posant pas les problèmes ci-dessus.

La présente invention a donc pour objet une composition se présentant sous une forme solide, comprenant :
- au moins un tensioactif à bas point de fusion,
- au moins un polymère choisi parmi :
   (i) les polymères ou copolymères obtenus par polymérisation
      o d'au moins un monomère (I) porteur d'une ou plusieurs fonctions choisies parmi les suivantes : acide carboxylique sous forme acide ou salifiée, ou précurseur d'acide carboxylique, ou acide sulfonique, sous forme acide ou salifiée, et/ou
      o d'au moins un monomère (II) ester polyoxyalkyléné d'acide carboxylique éthyléniquement insaturé, et éventuellement
      o d'au moins un monomère (III), linéaire ou ramifié, monoéthyléniquement ou polyéthyléniquement insaturé, non ionique en C₃-C₁₂ ;
   (ii) les polymères obtenus par polymérisation d'au moins un monomère (I) porteur d'une ou plusieurs fonctions choisies parmi les suivantes : acide carboxylique sous forme acide ou salifiée, ou précurseur d'acide carboxylique, ou acide sulfonique, sous forme acide ou salifiée, polymère comprenant en outre au moins un greffon hydrophobe, hydrocarboné, en C₄-C₃₀, saturé ou non, aromatique ou non, éventuellement interrompu par un ou plusieurs hétéroatomes ;
   (iii) les polymères obtenus par polymérisation d'au moins un monomère (IV), linéaire ou ramifié, monoéthyléniquement ou polyéthyléniquement insaturé, porteur d'un ou plusieurs groupements hydroxyles ou précurseurs de groupements hydroxyles, polymère comprenant en outre au moins un greffon hydrophobe, hydrocarboné, en C₄-C₃₀, saturé ou non, aromatique ou non, éventuellement interrompu par un ou plusieurs hétéroatomes ;
   (iv) les polypeptides d'origine naturelle ou synthétique, comportant au moins un greffon hydrophobe, hydrocarboné, en C₄-C₃₀, saturé ou non, aromatique ou non, éventuellement interrompu par un ou plusieurs hétéroatomes ;
   (v) les polysaccharides fortement dépolymérisés comportant au moins un greffon hydrophobe, hydrocarboné, en C₄-C₃₀, saturé ou non aromatique ou non, éventuellement interrompu par un ou plusieurs hétéroatomes.

La présente invention a de même pour objet un procédé de préparation de la composition consistant à effectuer les étapes suivantes :
- on prépare une solution aqueuse comprenant au moins un tensioactif à bas point de fusion, au moins un polymère,
- on sèche la solution ainsi obtenue.

Enfin, un dernier objet de l'invention concerne l'utilisation de ladite composition comme élément constitutif de formulations phytosanitaires, plus particulièrement solides.

La présente invention propose une solution aux problèmes de la mise en forme de produits liquides ou à bas point de fusion, qui sont habituellement formulés par absorption sur un support.

Elle possède en outre l'avantage d'avoir sa mise en forme adaptée selon les besoins. Ainsi, elle peut se trouver sous la forme d'une poudre, mais il est de même envisageable, de manière avantageuse, de procéder à une granulation ou un écaillage de la composition selon l'invention ou encore de la formulation qui la contient, sans rencontrer de difficulté.

La composition selon l'invention, présente l'avantage d'une part dé se solubiliser à nouveau et d'autre part de conserver toutes les propriétés du tensioactif (comme la tension de surface), comme si le tensioactif était seul dans la solution. En d'autres termes, le polymère avec lequel le tensioactif est associé dans la composition selon l'invention, est sans effet sur les propriétés du tensioactif, une fois la composition redissoute. Notons qu'un tel résultat n'était pas a priori évident, car on aurait pu s'attendre à une baisse des propriétés due à ce qu'une partie du tensioactif reste associée au polymère, comme cela arrive lorsqu'un composé est associé à un support.

Ce résultat est montré dans la figure annexée qui représente des courbes de tensions de surface de la composition selon l'invention une fois redissoute, en fonction de la concentration de la solution, comparée avec celle d'une solution comprenant seulement le tensioactif.

On a en outre constaté de manière totalement surprenante que l'utilisation de la composition selon l'invention permettait d'obtenir des formulations se présentant sous forme de granulés extrudés, alors que l'emploi du tensioactif seul ne permettait pas d'atteindre un résultat satisfaisant.

Enfin, la composition selon l'invention peut avoir un rôle d'activateur biologique de la matière active phytosanitaire entrant dans la composition de la formulation phytosanitaire.

Mais d'autres avantages et caractéristiques apparaîtront plus clairement à la lecture de la description et des exemples qui vont suivre.

Ainsi que cela a été indiqué auparavant, la composition selon l'invention comprend au moins un tensioactif à bas point de fusion.

Il est précisé que par tensioactif à bas point de fusion au sens de la présente invention, on désigne les tensioactifs présentant un point de fusion inférieur à 80°C. Plus particulièrement, lesdits tensioactifs présentent un point de fusion inférieur à 50°C. De préférence, les tensioactifs sont liquides à température ambiante.

Parmi les tensioactifs convenables, on peut citer notamment les tensioactifs suivants :
- les alcools gras polyoxyalkylénés
- les triglycérides polyoxyalkylénés
- les esters d'acides gras polyoxyalkylénés
- les esters de sorbitan polyoxyalkylénés
- les amides d'acides gras polyoxyalkylénés
- les amines grasses polyoxyalkylénées
- les amidoamines polyoxyalkyénées
- les di(phényl-1 éthyl) phénols polyoxyalkylénés
- les tri(phényl-1 éthyl) phénols polyoxyalkylénés
- les alkylphénols polyoxyalkylénés
- les produits résultant de la condensation de l'oxyde d'éthylène ou de l'oxyde de propylène avec l'éthylènediamine
- les hydrocarbures terpéniques alcoxylés tels que les dérivés d'α- ou de β-pinènes polyoxyalkylénés
- les alkylpolyglycosides pouvant être obtenus par condensation du glucose avec des alcools gras primaires présentant un groupe alkyle en C₄-C₂₀ ainsi qu'un nombre moyen de motifs glucose de l'ordre 0,5 à 3 par mole d'alkylpolyglycoside.

Par oxyalkylénés, on entend désigner des motifs oxyéthylénés, oxypropylénés, oxybutylénés, ou leurs combinaisons. De préférence, les tensioactifs mis en oeuvre comprennent des motifs oxyéthylénés ou oxyéthylénés et oxypropylénés.

Le nombre de motifs oxyéthylénés (OE) et/ou oxypropylénés (OP) de ces tensioactifs non ioniques vane habituellement de 1 à 50 selon la température de fusion du tensioactif. Plus particulièrement, le nombre de motifs OE ou OE/OP se situe entre 1 et 40.

Les alcools gras éthoxylés ou éthoxy-propoxylés comprennent généralement de 6 à 22 atomes de carbone, les motifs OE et OP étant exclus de ces nombres. De préférence, ces motifs sont des motifs éthoxylés.

Les triglycérides éthoxylés ou éthoxy-propoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de poisson, l'huile de palme, l'huile de pépin de raisin, l'huile de soja, l'huile de ricin, l'huile de colza, l'huile de palmiste, l'huile de noix de coco) et sont de préférence éthoxylés.

Les esters d'acides gras éthoxylés ou éthoxy-propoxylés comprennent généralement, pour la partie acide, de 6 à 22 atomes de carbone, les motifs OE et OP étant exclus de ces nombres, et sont de préférence éthoxylés.

Les esters de sorbitan éthoxylés ou éthoxy-propoxylés sont des esters du sorbitol cyclisé d'acide gras comprenant de 10 à 20 atomes de carbone comme l'acide laurique, l'acide stéarique ou l'acide oléique, et sont de préférence éthoxylés.

Le terme triglycéride éthoxylé vise dans la présente invention, aussi bien les produits obtenus par éthoxylation d'un triglycéride par l'oxyde d'éthylène et/ou par l'oxyde de propylène que ceux obtenus par transestérification d'un triglycéride par un polyéthylèneglycol et/ou du polypropylèneglycol.

De même, le terme ester d'acide gras éthoxylé inclut aussi bien les produits obtenus par éthoxylation d'un acide gras par l'oxyde d'éthylène que ceux obtenus par transestérification d'un acide gras par un polyéthylèneglycol.

Les amines et les amides gras éthoxylés ou éthoxy-propoxylés ont généralement de 6 à 22 atomes de carbone, les motifs OE et OP étant exclus de ces nombres, et sont de préférence éthoxylées.

Les amidoamines éthoxylées ou éthoxy-propoxylées ont généralement de 2 à 22 atomes de carbone pour les motifs hydrocarbonés, les motifs OE et OP étant exclus de ces nombres, et sont de préférence éthoxylées.

Notons que selon le pH d'utilisation des tensioactifs comprenant des fonctions amines, ceux-ci peuvent se trouver sous une forme non ionique ou cationique.

Les alkylphénols éthoxylés ou éthoxy-propoxylés sont généralement 1 ou 2 groupes alkyles, linéaires ou ramifiés, ayant 4 à 12 atomes de carbone. A titre d'exemple on peut citer notamment les groupes octyles, nonyles ou dodécyles.

A titre d'exemples de tensioactifs du groupe des alkylphénols éthoxy ou éthoxy-propoxylés, on peut citer le nonylphénol éthoxylé avec 2 motifs OE, le nonylphénol éthoxylé avec 4 motifs OE, le nonylphénol éthoxylé avec 6 motifs OE, le nonylphénol éthoxylé avec 9 motifs OE.

A titre d'exemples de tensioactifs du groupe des di- et tri- (phényl-1 éthyl) phénols éthoxy ou éthoxy-propoxylés, on peut citer notamment le di(phényl-1 éthyl)phénol éthoxylé avec 5 motifs OE, le di(phényl-1 éthyl)phénol éthoxylé avec 10 motifs OE, le tri(phényl-1 éthyl)phénol éthoxylé avec 16 motifs OE, le tri(phényl-1 éthyl)phénol éthoxylé avec 20 motifs OE, le tri(phényl-1 éthyl)phénol éthoxylé avec 25 motifs OE, le tn(phényl-1 éthyl)phénol éthoxylé avec 40 motifs OE, les tri(phényl-1 éthyl)phénols éthoxy-propoxylés avec 25 motifs OE + OP.

Il est de même possible de mettre en oeuvre comme constituant de la composition selon l'invention, un tensioactif ionique choisi parmi :
- les alcools gras polyoxyalkylénés sulfatés ou phosphatés
- les di(phényl-1 éthyl) phénols polyoxyalkylénés sulfatés ou phosphatés
- les tri(phényl-1 éthyl) phénols polyoxyalkylénés sulfatés ou phosphatés
- les alkylphénols polyoxyalkylénés sulfatés ou phosphatés.

La fonction sulfate est la suivante : - SO₃M dans laquelle M représente un atome d'hydrogène, un métal alcalin tel que le sodium ou le potassium par exemple, un radical ammonium N(R₄)⁺ avec R, identiques ou non, représentant un atome d'hydrogène, un radical hydrocarboné comprenant 1 à 4 atomes de carbone, éventuellement porteur d'un radical hydroxyle.

La fonction phosphate peut être représentée par les formules suivantes : >P(=O)[OM] ou -P(=O)[OM]₂ , dans lesquelles M a la même signification qu'au-dessus.

La composition selon l'invention comprend en outre au moins un polymère ou copolymère choisi parmi une liste de cinq types de (co)polymères. Par la suite et pour simplifier l'exposé, on n'utilisera que le terme de polymère, sachant qu'il désignera à la fois des homopolymères et des copolymères.

De plus, le polymère selon l'invention peut correspondre à un type de polymère ou bien à une combinaison de plusieurs d'entre eux.

On a constaté que les polymères, qui vont être décrits ci-dessous, présentaient un caractère associatif avec le tensioactif, évitant de ce fait toute séparation importante des deux composés dans une solution concentrée.

Ainsi que cela a été indiqué auparavant, une première variante de l'invention consiste à mettre en oeuvre au moins un polymère issu de la polymérisation :
□ d'au moins un monomère (I) porteur d'une ou plusieurs fonctions choisies parmi les suivantes : acide carboxylique sous forme acide ou salifiée, ou précurseur d'acide carboxylique, ou acide sulfonique, sous forme acide ou salifiée, et/ou
□ d'au moins un monomère (II) ester polyoxyalkyléné d'acide carboxylique éthyléniquement insaturé, et éventuellement
□ d'au moins un monomère (III), linéaire ou ramifié, monoéthyléniquement ou polyéthyléniquement insaturé.

Plus particulièrement, le monomère (I) est choisi parmi ceux permettant d'obtenir, après polymérisation, des motifs unitaires hydrophiles.

En outre, par fonction précurseur de fonction acide carboxylique, on entend désigner les anhydrides par exemple.

De préférence le monomère (I) comprend une ou plusieurs fonctions acides carboxyliques, sous forme acide ou salifiée.

Selon un mode de réalisation particulier de l'invention, le monomère (I) correspond à la formule suivante :

(R¹)(R¹) - C = C(R¹) - COOH (I)

formule dans laquelle les radicaux R¹, identiques ou différents, représentent un atome d'hydrogène, un radical hydrocarboné en C₁-C₁₀ comprenant éventuellement un groupement - COOH, un groupement - COOH.

Notons que le monomère (I) peut se trouver sous la forme d'un anhydride s'il comprend plusieurs fonctions carboxyliques.

En ce qui concerne le monomère (II) celui-ci correspond plus particulièrement à la formule suivante :

CH₂=C(R²⁰)-C(O)-O-[CH(R²¹)CH(R²²)O]ₘ-[CH₂-CH₂O]ₙ - R²³ (II)

formule dans laquelle :
R²⁰ est un atome d'hydrogène ou un radical méthyle,
R²¹ et R²² représentent un atome d'hydrogène ou un radical alkyle contenant de 1 à 4 atomes de carbone, à la condition que l'un et l'autre ne soient simultanément un radical alkyle ou un atome d'hydrogène ; de préférence R²¹ représente un hydrogène et R²² un radical alkyle,
R²³ est un radical alkyle, aryle, alkylaryle ou arylalkyle contenant de 1 à 30, de préférence de 6 à 30 atomes de carbone,
n est compris entre 2 et 100, de préférence entre 6 et 100 et m est compris entre 0 et 50, sous réserve que n soit supérieur ou égal à m et leur somme comprise entre 2 et 100, de préférence entre 6 et 100 ; la position des blocs -CH(R²¹)CH(R²²)O- et -CH₂-CH₂O- pouvant être intervertie .

De préférence, la position desdits blocs est telle qu'apparaissant sur la formule (II) ci-dessus.

Quant au monomère de formule (III), ce dernier est plus particulièrement un monomère α, β éthyléniquement insaturé en C₃-C₁₂ non ionique.

De préférence, il correspond à la formule suivante :

(R³¹)(R³²) C = CH₂ (III)

formule dans laquelle :
les radicaux R³¹ et R³², identiques ou différents, représentent un radical hydrocarboné, linéaire ou ramifié, en C₁ - C₁₀, ou un atome d'hydrogène, à la condition que R³¹ et R³², ne représentent pas simultanément un atome d'hydrogène ;
de plus :
   - si R³¹ est un atome d'hydrogène, alors R³², représente un groupement -COOR^{a}, -OCOR^{a}, -C₆H₄R^{b}, -CONHR^{a} ou -CON(R^{a})₂,
   - si R³¹ est un radical méthyle, alors R³², représente un groupement -COOR^{a}, - C₆H₄R^{b}, -CONHR^{a} ou -CON(R^{a})₂,
formules dans lesquelles R^{a}, identiques ou non, représentent un groupement alkyle en C₁-C₁₀ ou un groupement hydroxyalkyle en C₁-C₁₀, R^{b} représente un atome d'hydrogène, de chlore, de brome ou un groupement alkyle en C₁-C₄.

Les polymères correspondant à cette variante (i) pourront donc comprendre soit un monomère (I), et/ou soit un monomère (II), chacun de ces deux monomères pouvant être combiné à un monomère (III). Les polymères correspondant à cette variante peuvent de même contenir une combinaison de chacun des trois monomères précités.

Selon un premier mode de réalisation de cette variante, on met en oeuvre un polymère ou copolymère comprenant des monomères de type (I).

Selon un deuxième mode de réalisation particulier de cette première variante, on peut citer tout d'abord les polymères issus de la polymérisation d'au moins un monomère de formule (I) et d'au moins un monomère de formule (II).

De préférence, le monomère de formule (I) mis en oeuvre dans le premier et le deuxième modes précités, est un acide monocarboxylique ou polycarboxylique correspondant à la formule suivante :

(R¹¹)HC = C (R¹²) COOH

formule dans laquelle :
R¹¹, représente un atome d'hydrogène, un groupement -COOH ou un groupement -(CH₂)ₙ - COOH dans lequel n est compris entre 1 et 4, un radical alkyle en C₁-C₄ ; R¹² représente un atome d'hydrogène, en groupement -(CH₂)ₘ - COOH dans lequel m est compris entre 1 et 4, un radical alkyle en C₁-C₄.

De préférence, R¹¹ représente un atome d'hydrogène, un groupement -COOH ou -(CH₂)-COOH, un radical méthyle, et R¹², il représente un atome d'hydrogène, un groupement -CH₂ COOH ou un radical méthyle.

Notons que si l'acide comprend plusieurs fonctions acides carboxyliques, celui-ci peut se trouver sous la forme d'un anhydride.

Selon un mode de réalisation plus particulier, le monomère de formule (I) est choisi parmi les acides ou anhydrides acrylique, méthacrylique, citraconique maléique, fumarique, itaconique, crotonique.

En ce qui concerne les monomères de formule (II), on utilise de préférence des monomères pour lesquels R²¹ est un hydrogène, R²³ est un radical alkyle contenant de 8 à 30 atomes de carbone, un radical phényle substitué par un à trois groupements 1-phényléthyles, un radical alkylphényle dont le radical alkyle content de 8 à 16 atomes de carbone. Selon un autre mode de réalisation les monomères de formule (II) sont tels qu'ils viennent d'être décrits dans leur forme préférée, m étant de plus égal à 0.

Parmi les monomères de ce type, susceptibles d'être mis en oeuvre, on peut citer ceux décrits dans les brevets EP 705854, US 4 138 381 ou encore US 4 384 096.

Le polymère obtenu par réaction des monomères (I) et/ou (II) est de préférence obtenu par polymérisation radicalaire.

Un second mode de réalisation particulier de cette première variante consiste à mettre en oeuvre un polymère (i) obtenu par polymérisation
□ d'au moins un monomère de formule (I) :

   (R¹)(R¹) C = C(R¹) - COOH

   formule dans laquelle les radicaux R¹, identiques ou différents, représentent un atome d'hydrogène, un radical hydrocarboné en C₁-C₁₀ comprenant éventuellement un groupement - COOH, un groupement - COOH ; et
□ d'au moins un monomère de formule (III) :

   (R³¹)(R³²) C = CH₂

   formule dans laquelle:
   les radicaux R³¹ et R³², identiques ou différents, représentent un radical hydrocarboné, linéaire ou ramifié, en C₁ - C₁₀, ou un atome d'hydrogène, à la condition que R³¹ et R³², ne représentent pas simultanément un atome d'hydrogène ;
   de plus :
      - si R³¹ est un atome d'hydrogène, alors R³², représente un groupement -COOR^{a}, -OCOR^{a}, -C₆H₄R^{b}, -CONHR^{a} ou -CON(R^{a})₂,
      - si R³¹ est un radical méthyle, alors R³², représente un groupement -COOR^{a}, - C₆H₄R^{b}, -CONHR^{a} ou -CON(R^{a})₂,
   formules dans lesquelles R^{a}, identiques ou non, représentent un groupement alkyle en C₁-C₁₀ ou un groupement hydroxyalkyle en C₁-C₁₀, R^{b} représente un atome d'hydrogène, de chlore, de brome ou un groupement alkyle en C₁-C₄.

Ce qui a été décrit auparavant relativement aux définitions plus préférées du monomères (I) ne sera pas repris ici. On pourra donc s'y référer.

En ce qui concerne le monomère de formule (III), ce dernier peut être notamment choisi parmi les esters hydroxyalkyle en C₁-C₁₀ ou alkyle en C₁-C₁₀ des acides acrylique et méthacrylique. A titre d'exemples de tels monomères, on peut citer l'acrylate d'éthyle, le méthacrylate d'éthyle, l'acrylate de 2-éthylhexyle, l'acrylate de butyle, le méthacrylate de butyle, l'acrylate de 2-hydroxyéthyle, le méthacrylate de 2-hydroxybutyle.

On peut de même utiliser des esters insaturés tels que l'acétate de vinyle, le butyrate de vinyle, le caproate de vinyle.

Le monomère (III) peut de même être choisi parmi des monomères comprenant un noyau aromatique. Par exemple, conviennent à la mise en oeuvre de l'invention le styrène, le vinyltoluène, le ter-butylstyrène, l'hydroxystyrène, l'isopropylstyrène, le p-chlorostyrène.

Le monomère peut de même comprendre une fonction amide. Par exemple, les (méth)acrylamides N-substitués ou N,N'-disubstitués peuvent convenir à la réalisation de l'invention.

Le monomère (III) peut aussi être choisi parmi des monomères hydrocarbonés insaturés comme notamment le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène.

Selon un mode particulièrement avantageux de l'invention, le copolymère de formule (i) est issu de la polymérisation de l'anhydride maléique et du 2,4,4 - triméthyl 1-pentène.

Il est précisé que le polymère (i) est obtenu plus particulièrement en effectuant une polymérisation radicalaire des monomères (I) et (III).

Ces composés préférés sont bien connus de l'homme de l'art. A titre de copolymère de ce type, on peut citer celui commercialisé sous la dénomination Geropon® T36 (anhydride maléique/diisobutylène) commercialisé par Rhodia Chimie, ainsi que le Sokalan® CP9 (anhydride maléique/oléfine) commercialisé par BASF.

Notons que l'on ne sortirait pas du cadre de la présente invention en utilisant un polymère (i) comprenant les trois types de monomères qui viennent d'être décrits.

La masse moléculaire en poids des polymères (i) est plus particulièrement telle que la viscosité de la solution aqueuse de polymère et de tensioactif à bas point de fusion destinée à être séchée est inférieure ou égale à 10000 mPas, de préférence, inférieure ou égale à 5000 mPas (RVT Brookfield, 20 tour/min, aiguille n°5).

A titre d'indication, la masse moléculaire en poids des polymères (i) ne comprenant que des motifs (I) est inférieure à 200000 g/mol (mesurée par chromatographie par exclusion stérique).

A titre d'indication encore, la masse moléculaire en poids des autres polymères (i) est inférieure à 30000 g/mol, de préférence inférieure à 20000 g/mol (mesurée par chromatographie par exclusion stérique).

Il est précisé en outre que la masse moléculaire du polymère ainsi que les proportions respectives des monomères (I) et (II) et/ou (III) sont telles que la solution aqueuse comprenant ledit polymère et le tensioactif reste stable pendant au moins la durée de préparation de la composition selon l'invention (séchage) ; la concentration en polymère étant comprise entre 0 exclu et 90 % en poids, de préférence entre 20 et 80 % en poids.

Une deuxième variante de la présente invention est constituée par l'utilisation d'au moins un polymère (ii) issu de la polymérisation d'au moins un monomère de formule (I) telle que définie précédemment et comportant, en outre, au moins un greffon hydrophobe hydrocarboné en C₄-C₃₀, saturé ou non, aromatique ou non, éventuellement interrompu par un ou plusieurs hétéroatomes.

Tout ce qui a été indiqué auparavant à propos du monomère de formule (I) reste applicable dans le cas du polymère (ii) et ne sera donc pas repris ici.

Notons que ce polymère est obtenu de préférence, en mettant oeuvre une polymérisation radicalaire.

Mais plus particulièrement, le monomère (I) est choisi parmi les acides ou les anhydrides acrylique, méthacrylique, citraconique maléique, fumarique, itaconique, crotonique.

Par ailleurs, le greffon hydrophobe est choisi parmi les radicaux aliphatiques, cycliques, aromatiques, alkylaromatiques, arylaliphatiques comprenant 3 à 30 atomes de carbone, de préférence 3 à 22 atomes de carbone, et pouvant être interrompus par un ou plusieurs hétéroatomes, de préférence l'oxygène. En outre, le greffon comprend une fonction susceptible de réagir avec les fonctions acides libres du polymère. Ainsi, le greffon est relié au squelette du polymère par l'intermédiaire de groupements ester et/ou amide, notamment.

De tels polymères greffés sont obtenus en mettant en oeuvre des méthodes connues de l'homme de l'art consistant dans un premier temps à faire polymériser, de préférence par voie radicalaire le ou les monomères (I), puis à faire réagir une partie des fonctions carboxyliques libres, avec des réactifs choisis notamment parmi les alcools ou les amines propylique, hexylique, heptylique, laurylique, béhénique, éventuellement éthoxylés et/ou propoxylés, les mono-, di- ou tnstyrylphénols éventuellement éthoxylés et/ou propoxylés.

La masse moléculaire en poids des polymères (ii) est plus particulièrement telle que la viscosité de la solution aqueuse de polymère et de tensioactif à bas point de fusion destinée à être séchée est inférieure ou égale à 10000 mPas, de préférence, inférieure ou égale à 5000 mPas (RVT Brookfield, 20 tour/min, aiguille n°5). A titre indicatif, la masse moléculaire en poids des polymères (II) est plus particulièrement inférieure à 30000 g/mole, de préférence inférieure à 20000 g/mol (mesurée par chromatographie par exclusion stérique).

Cependant, la masse moléculaire ainsi que les proportions respectives de monomère(s) (I) et de greffons hydrophobes sont telles que la solution aqueuse, comprenant ledit polymère et le tensioactif reste, stable pendant au moins la durée de préparation de la composition selon l'invention (séchage) ; la concentration en polymère étant comprise entre 0 exclu et 90 % en poids, de préférence entre 20 et 80 % en poids.

Les polymères (ii) peuvent en outre comprendre des motifs-correspondant à des monomères de formule (III) décrite plus haut.

Une troisième variante de la présente invention, consiste à employer un polymère issu de la polymérisation d'au moins un monomère (IV), linéaire ou ramifié, monoéthyléniquement ou polyéthyléniquement insaturé, porteur d'un ou plusieurs groupements hydroxyles ou précurseurs de groupements hydroxyles, polymère porteur d'au moins un greffon hydrophobe, hydrocarboné, en C₄-C₃₀, saturé ou non, aromatique ou non, et pouvant être interrompu par un ou plusieurs hétéroatomes, de préférence l'oxygène.

Le monomère (IV) correspond plus particulièrement à la formule suivante :

(R⁵)(R⁵) C = CH₂

formule dans laquelle les radicaux R⁵, identiques ou différents, représentent un radical, linéaire ou ramifié, en C₁ - C₁₀, l'un d'eux au moins étant un groupement hydroxyle ou précurseur d'un groupement hydroxyle.

De préférence, l'un au moins des radicaux R⁵ porte un groupement précurseur d'un groupement hydroxyle.

Parmi les groupements précurseurs de groupements hydroxyles, notons tout particulièrement les fonctions esters pour lesquelles l'alcool est rattaché au monomère. Ainsi des monomères vinyliques du type de l'acétate de vinyle conviennent à l'invention.

Cette variante est particulièrement appropriée pour l'obtention de polymères du type alcool polyvinylique.

Ce qui a été décrit auparavant concernant les greffons hydrophobes reste valable et ne sera pas repris dans cette partie du texte. Notons plus particulièrement que les greffons portent des fonctions susceptibles de réagir avec les fonctions hydroxyles du polymère. Par exemples, ces greffons pourront être rattachés au squelette du polymère par l'intermédiaire de liaisons ester, par exemple.

La masse moléculaire en poids des polymères (iii) est plus particulièrement telle que la viscosité de la solution aqueuse de polymère et de tensioactif à bas point de fusion destinée à être séchée est inférieure ou égale à 10000 mPas, de préférence, inférieure ou égale à 5000 mPas (RVT Brookfield, 20 tour/min, aiguille n°5). A titre indicatif, la masse moléculaire en poids des polymères (iii) est plus particulièrement inférieure à 30000 g/mole, de préférence 20000 g/mole (mesurée par chromatographie par exclusion stérique).

Cependant, la masse moléculaire ainsi que les proportions respectives de monomère(s) (I), éventuellement de monomères (III), et de greffons hydrophobes sont telles que la solution aqueuse, comprenant ledit polymère et le tensioactif reste, stable pendant au moins la durée de préparation de la composition selon l'invention (séchage) ; la concentration en polymère étant comprise entre 0 exclu et 90 % en poids, de préférence entre 20 et 80 % en poids.

Une quatrième variante de la présente invention, consiste à employer en tant que polymère, au moins un polypeptide d'origine naturelle ou synthétique, comportant au moins un greffon hydrophobe, hydrocarboné, en C₄-C₃₀ saturé ou non, aromatique ou non, éventuellement interrompu par un ou plusieurs hétéroatomes.

Les polymères peptidiques d'origine naturelle ou synthétique sont des homopolymères ou copolymères dérivés de la polycondensation d'acides aminés, notamment de l'acide aspartique et glutamique ou des précurseurs des diaminodiacides, et hydrolyse. Ces polymères peuvent être aussi bien des homopolymères dérivés de l'acide aspartique ou glutamique, que des copolymères dérivés de l'acide aspartique et de l'acide glutamique en proportions quelconques, ou des copolymères dérivés de l'acide aspartique et/ou glutamique et d'aminoacides d'autres. Parmi les aminoacides copolymérisables, on peut entre autres, citer la glycine, l'alanine, la leucine, l'isoleucine, la phényl alanine, la méthionine, l'histidine, la proline, la lysine, la sérine, la thréonine, la cystéine...

Parmi les polypeptides d'origine naturelle, on peut mentionner les protéines d'origine végétale ou animale, hydrosolubles ou hydrodispersables. Les protéines d'origine végétales sont de préférence des hydrolysats de protéines. Leur degré d'hydrolyse est plus particulièrement inférieur à 40 %.

Parmi les protéines d'origine végétale, on peut citer à titre indicatif, les protéines provenant des graines protéagineuses, notamment celles de pois, féverole, lupin, haricot et lentille ; les protéines provenant de grains de céréales notamment celles de blé, orge, seigle, maïs, riz, avoine, millet ; les protéines provenant de graines oléagineuses notamment celles du soja, arachide, tournesol, colza et noix de coco ; les protéines provenant de feuilles notamment luzerne et ortie ; les protéines provenant d'organes végétaux et réserves enterrées notamment celles de pomme de terre, betterave.

Parmi les protéines d'origine animale, on peut citer par exemple, les protéines musculaires, notamment les protéines du stroma, la gélatine ; les protéines provenant du lait, notamment caséine, lactoglobuline ; et les protéines de poissons.

Les protéines d'origine végétale et plus particulièrement les protéines provenant du soja et du blé sont préférées.

Ce qui a été indiqué auparavant à propos de la nature du greffon hydrophobe reste valable et ne sera pas repris ici.

Il est à noter que les greffons hydrophobes peuvent être liés au polypeptide par l'intermédiaire de liaisons amide, ester, uréthanne, amine.

Les polymères greffés sont obtenus par réaction d'une partie des fonctions amines ou acides libres, avec des composés permettant de créer les liaisons précitées.

Les composés préférés présentent un degré de polymérisation faible. Plus particulièrement, à titre d'illustration, la masse moléculaire en poids est inférieure à 30000 g/mole, de préférence inférieure à 20000 g/mol (mesurée par chromatographie par exclusion stérique).

Il est précisé que la masse moléculaire du polymère, ainsi que la proportion de greffon par rapport au polypeptide, sont telles que la solution aqueuse, comprenant ledit polymère et le tensioactif reste, stable pendant au moins la durée de préparation de la composition selon l'invention (séchage) ; la concentration en polymère étant comprise entre 0 exclu et 90 % en poids, de préférence entre 20 et 80 % en poids. De plus, la viscosité de la solution aqueuse de polymère et de tensioactif à bas point de fusion destinée à être séchée est plus particulièrement inférieure ou égale à 10000 mPas, de préférence, inférieure ou égale à 5000 mPas (RVT Brookfield, 20 tour/min, aiguille n°5).

Selon une dernière variante de la présente invention, polymère est choisi parmi les polysaccharides fortement dépolymérisés comportant un greffon hydrophobe hydrocarboné, en C₄-C₃₀, saturé ou non, aromatique ou non, éventuellement interrompu par un ou plusieurs hétéroatomes.

De tels composés sont notamment décrits dans l'ouvrage de P. ARNAUD intitulé "cours de chimie organique", GAUTHIER-VILLARS éditeurs, 1987.

A titre d'exemple non limitatif de polysaccharides fortement dépolymérisés, on peut citer ceux obtenus à partir du dextran, d'amidon, de maltodextrine, de gomme xanthane et de galactomannanes tels que le guar ou la caroube.

Ces polysaccharides présentent de préférence un point de fusion supérieur à 100°C et une solubilité dans l'eau comprise entre 50 et 500 g/l.

Au sujet des greffons hydrophobes, on pourra se référer à ce qui a été indiqué auparavant.

Il est à noter que les greffons hydrophobes peuvent être liés au polysaccharide par l'intermédiaire de liaisons ester, amide, uréthanne, amine.

Les polymères greffés sont obtenus par réaction d'une partie des fonctions alcools ou acides libres, avec des composés permettant de créer les liaisons précitées.

Plus particulièrement, à titre d'illustration, la masse moléculaire en poids de ces polymères est inférieure à 30000 g/mole, de préférence inférieure à 20000 g/mol (mesurée par chromatographie par exclusion stérique).

Cependant, il est précisé que la masse moléculaire du polymère dépolymérisé, ainsi que la proportion de greffon par rapport au polysaccharide sont telles que la solution aqueuse, comprenant ledit polymère et le tensioactif reste, stable pendant au moins la durée de préparation de la composition selon l'invention (séchage) ; la concentration en polymère étant comprise entre 0 exclu et 90 % en poids, de préférence entre 20 et 80 % en poids. De plus, la viscosité de la solution aqueuse de polymère et de tensioactif à bas point de fusion destinée à être séchée est plus particulièrement inférieure ou égale à 10000 mPas, de préférence, inférieure ou égale à 5000 mPas (RVT Brookfield, 20 tour/min, aiguille n°5).

Bien entendu, il est tout à fait envisageable d'utiliser ces différents types de composés hydrosolubles ou hydrodispersables en combinaison.

Il est possible d'ajouter à la composition selon l'invention, toute charge classique selon le domaine d'application auquel on la destine.

La quantité de charge peut varier dans de larges limites. A titre illustratif, la quantité varie entre 0 et 50 (exclu) % en poids de la composition.

Parmi les charges, on peut citer les sels minéraux solubles comme les carbonates, bicarbonates de métaux alcalins (sodium, potassium), les sucres tels que le glucose, le saccharose, le lactose, la maltose, le dextrose, le dextran, la maltodextrine, etc. On peut de même incorporer des sels de calcium de métal alcalino-terreux, tels que les chlorures de calcium ou de magnésium par exemple.

On peut aussi utiliser des agents antimottants, incorporés de préférence au moment l'étape de séchage, ou une fois cette dernière réalisée.

Le rapport pondéral des concentrations entre le tensioactif à bas point de fusion et le polymère, peut aussi varier dans un large domaine. Cependant selon un mode de réalisation particulièrement avantageux de l'invention, le rapport pondéral des concentrations est compris entre 50 / 50 et 90 / 10.

Le procédé de préparation de la composition va maintenant être décrit.

Comme indiqué précédemment, le procédé consiste dans une première étape à préparer une solution en milieu aqueux, d'au moins un tensioactif à bas point de fusion, d'au moins un polymère.

La préparation est réalisée par simple mélange des composés ci-dessus mentionnés. Elle peut avoir lieu dans tout appareil muni de moyens d'agitation mécaniques.

L'obtention du mélange est avantageusement réalisée à une température à laquelle le tensioactif se trouve sous une forme liquide.

La quantité de matière sèche du mélange avant l'opération de séchage est généralement comprise entre 40 et 70 % en poids.

Les teneurs respectives de divers constituants sont choisies de telle sorte que les solides séchés présentent la composition définie auparavant.

La seconde étape du procédé de préparation selon l'invention consiste à sécher le mélange ainsi obtenu pour obtenir un solide.

La méthode mise en oeuvre pour éliminer l'eau du mélange et obtenir le solide, peut être effectuée par tout moyen connu de l'homme du métier. Ainsi, on peut envisager un séchage en étuve. Cependant, selon une réalisation particulière de l'invention, on met en oeuvre une méthode de séchage dite rapide dudit mélange.

Conviennent à ce titre le séchage par atomisation, ou mettant en oeuvre des tambours Duprat@, la lyophilisation (congélation-sublimation).

Notons que les modes de séchage dont la cinétique est rapide (atomisation, sécheur Duprat®) sont avantageux car ils permettent d'obtenir des solides dont la répartitions des divers éléments constitutifs est très homogène.

Le séchage par atomisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence comprise entre 100 et 115°C et la température de sortie est de préférence comprise entre 55 et 65°C. Ces températures sont données à titre indicatif, et dépendent de la stabilité thermique des divers éléments.

Dans le cas d'opérations de séchage du mélange réalisées au moyen de tambour Duprat®, ou de tout moyen permettant d'obtenir rapidement un film sec qui est séparé du support séchant par une opération de raclage par exemple, on obtient des particules (ou écailles) que l'on peut éventuellement broyer (pour obtenir une poudre). Si nécessaire, ces particules peuvent faire l'objet d'une mise en oeuvre ultérieure, comme une étape d'agglomération, de manière à obtenir des granulés.

Ainsi que cela a été indiqué auparavant, la composition selon l'invention peut être utilisée comme élément constitutif de formulations phytosanitaires, plus particulièrement de formulations solides.

Il est à noter que la composition selon l'invention est tout particulièrement appropriée pour l'obtention de formulation phytosanitaires se présentant sous la forme de composés extrudés.

La teneur en composition dans la formulation phytosanitaire est habituellement comprise entre 5 et 40 % en poids de la formulation phytosanitaire, de préférence entre 10 et 40 % en poids de la formulation phytosanitaire.

Par formulation phytosanitaire, on entend toute composition destinée à des applications dans le domaine de l'agriculture, comprenant au moins une matière biologiquement active, comme le sont notamment les pesticides, mais également les éléments nutritifs favorisant la croissance et le développement des plantes. Par pesticides, on désigne entre autres, les herbicides, les fongicides, les acaricides, les insecticides, les nématicides.

Il est à noter que la composition selon l'invention peut être utilisée avec tout type de matière active phytosanitaire. De préférence, on met en oeuvre des matières actives solides.

A titre d'exemple non limitatif de matières actives convenables, on peut citer entre autres l'Améthryne, le Diuron, le Linuron, le Chlortoluron, l'isoproturon, le Nicosulfuron, le Metamitron, le Primsulfuron-méthyle, le Metsulfuron-méthyle, l'Aclonifen, l'Atrazine, le Chlorothalonil, le cymoxanil, le Mancozeb, le Zineb, la Phenmédipham, la famille des phénoxy, la famille des aminophosphates, aminop^hosphonates, le CMPP, le MCPA, le 2,4-D, la Simazine, le Bromoxynil, les produits actifs de la série des imidazolinones tels que l'Imazapyr, l'Imazaquine, l'Imazéthapyr, l'Imazaméthabenz.

En ce qui concerne les éléments nutritifs, il s'agit de préférence de sels métalliques comme le zinc et le fer, par exemple, et préférentiellement de manganèse. Ces sels sont utilisés sous forme de chélates de type E.D.T.A. par exemple ou de sulfates.

Parmi les matières actives préférées, on citera tout particulièrement les herbicides choisis parmi les -dérivés aminophosphates, ou aminophosphonates, et préférentiellement le glyphosate, le sulphosate, le glufosinate, ainsi que les sels organiques ou inorganiques respectifs de ces composés.

De préférence, les formulations selon l'invention comprennent du glyphosate (N-phosphonométhylglycine et ses dérivés), et plus particulièrement du glyphosate sous la forme de sel.

A titre de sels convenables, on peut plus particulièrement citer les sels de métaux alcalins comme le sodium ou le potassium ; les sels d'ammonium, de type N(R)₄⁺ pour lequel les radicaux R, identiques ou différents, représentent un atome d'hydrogène ou un radical hydrocarboné en C₁-C₆, linéaire ou non, saturé ou non, éventuellement substitué par un groupement hydroxyle ; ou encore les sels de sulfonium ; lesdits sels étant présents seuls ou en combinaison.

Parmi les sels d'ammonium on peut citer tout particulièrement, les amines secondaires ou primaires comme l'isopropylamine, la diméthylamine ou les diamines comme l'éthylènediamine. Quant aux sels de sulfonium, le triméthylsulfonium convient parfaitement ; les sels d'isopropylamine et le sel de triméthylsulfonium étant préférés.

La quantité de matière active dans la formulation phytosanitaire solide représente habituellement 30 à 95 % en poids par rapport au poids total de la composition phytosanitaire solide.

La formulation phytosanitaire peut de même les additifs classiques dans le domaine.

Ainsi, elles peuvent comprendre de manière avantageuse des composés dont le rôle est d'augmenter l'efficacité de la matière active. Par exemple, pour ce qui est des aminophosphates, et tout particulièrement du glyphosate, on peut citer les sels d'ammonium, comme le sulfate d'ammonium par exemple. La teneur en ce type de composé peut représenter jusqu'à 40 % en poids de la formulation phytosanitaire.

Les formulations peuvent de même comprendre des agents dispersants, comme par exemple, des polymères du type des lignosulfonates (sels de sodium, calcium ou ammonium) éventuellement combiné à un di- ou tri-styrylphénol éthoxylé, éventuellement sulfaté, et neutralisé, les copolymères anhydride maléique / isobutylène (sels de sodium ou d'ammonium), les acides phénylsulfoniques condensés (sels de sodium), ou encore les polymères naphtalènesulfonate / formaldéhyde condensés (sels de sodium ou d'ammonium). La teneur en agent dispersant est habituellement inférieure ou égale à 20 % en poids de la formulation.

A titre d'additif possible des formulations phytosanitaires, on peut aussi mentionner les agents mouillants, à raison d'une teneur allant jusqu'à 10 % en poids de la formulation. Ces derniers peuvent entre autres, être choisis parmi les agents anioniques tels que par exemple les alkylnaphtalène sulfonates, les alkylbenzènes sulfonates, les alkylsulfosuccinates, les alkyltaurates, les alkylsulfates. On peut aussi employer des agents mouillants non ioniques tels que les diols acétyléniques, les alkylphénols éthoxylés, etc.

Comme additif du type des agents désintégrants et/ou liants, peuvent convenir notamment l'amidon, les polyvinylpyrrolidones réticulées, la cellulose microcristalline, la carboxyméthylcellulose de sodium réticulée, les polysaccharides du soja, les résines échangeuses d'ions, les copolymères oxyde d'éthylène/oxyde de propylène, les alkylphénols polyethoxylés. La teneur en ce type de composés, lorsqu'ils sont présents, est en général d'au plus 10 % en poids de la formulation.

Des agents anti-mottant peuvent aussi être employés, comme les phosphates d'ammonium ou de sodium, le carbonate ou bicarbonate de sodium, l'acétate de sodium, le métasilicate de sodium, les sulfates de magnésium, zinc ou calcium, l'hydroxyde de magnésium, le chlorure de calcium, les tamis moléculaires, les alkylsulfosuccinates de sodium, les oxydes de baryum ou de calcium. La teneur en ces additifs reste habituellement inférieure à 10 % en poids de la formulation.

Des agents stabilisants peuvent entrer dans la composition des formulations phytosanitaires, à raison de 10 % en poids de la formulation au plus, comme par exemple les sulfates de métaux alcalino-terreux ou de transition, l'hexamétaphosphate de sodium, le chlorure de calcium, l'anhydride borique.

On peut de plus ajouter aux formulations, des charges inertes comme les argiles, les silices synthétiques et de diatomées, les silicates de calcium ou magnésium, le dioxyde de titane, les oxydes d'aluminium, zinc ou calcium, les carbonates de calcium ou de magnésium, les sulfates de sodium, ammonium, calcium, le noir de carbone. Les charges peuvent représenter jusqu'à 50 % en poids de la formulation.

Mais d'autres composés peuvent de même entrer dans la composition des formulations phytosanitaires, comme des tensioactifs supplémentaires, des agents anti-mousses, etc.

Les formulations phytosanitaires peuvent être obtenues par mélange de ces divers éléments constitutifs. Ce mélange peut être réalisé à sec, éventuellement en broyant l'ensemble, si la nature des composés le permet. Il est suivi habituellement d'une étape d'agglomération par ajout d'un milieu aqueux, de préférence de l'eau, aux particules obtenues. Une fois l'agglomération effectuée, on met en forme le mélange par extrusion ou granulation. Enfin, on met en oeuvre une étape de séchage.

L'opération d'extrusion ou de granulation est réalisée selon des techniques bien connues de l'homme de l'art, par exemple extrusion à travers une filière, une grille, etc., ou granulation à l'aide d'un drageoir, d'une turbosphère, entres autres.

Des exemples concrets mais non limitatifs de l'invention vont maintenant être présentés.

### EXEMPLE 1

Dans une cuve, on introduit 50 kg d'une solution aqueuse de Geropon T36® à 26,3 % d'extrait sec (commercialisé par la société Rhodia Chimie) et 13,5 kg de Rhodasurf 860 P® (alcool éthoxylé - commercialisé par la société Rhodia Chimie).

On ajoute ensuite une solution comprenant 600 ml d'eau permutée et 250 g d'hydroxyde de sodium.

Puis on agite l'ensemble à température ambiante pendant une heure (80 tour/minute).

On obtient alors une solution dont l'extrait sec est de 40 %.

La viscosité de la solution est de 1100 mPa.s (Brookfield RTV 20, aiguille 4).

La solution est ensuite séchée dans un sécheur Duprat® (tambour tournant raclé). Conditions : Pvapeur dans le tambour : 3 bar (environ 135°C) ; temps de contact de la solution avec le tambour : 29 secondes ; débit de poudre : 5,6 kg/h.

On obtient une poudre dont la teneur en eau est de 2,5 % en poids.

Les caractéristiques physico-chimiques de la poudre après redissolution dans l'eau de la poudre sont mesurées par un tensiomètre LAUDA à goutte pendante.

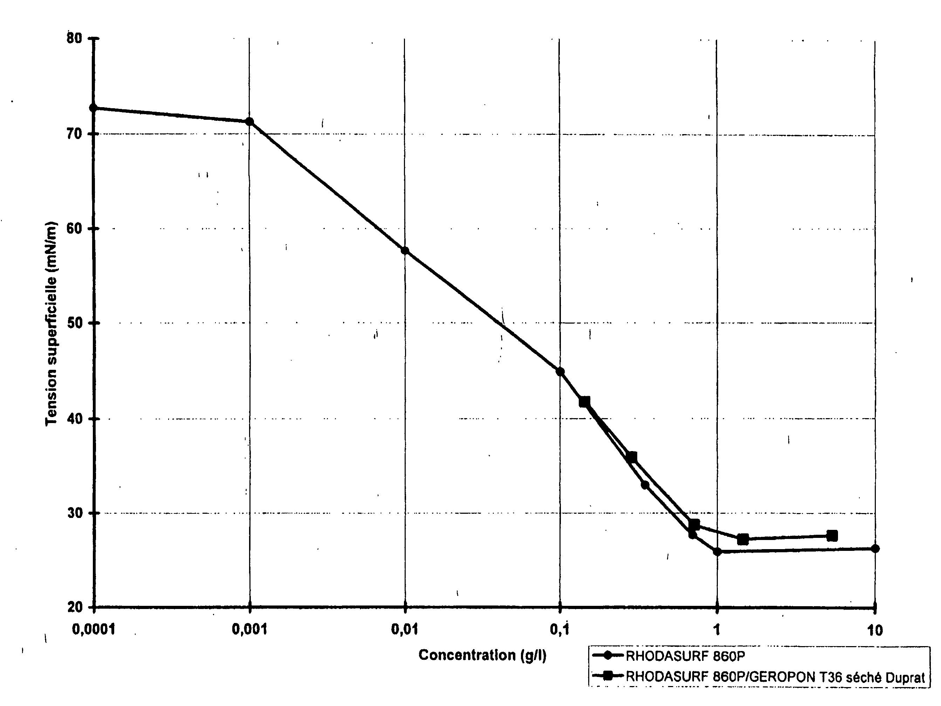

La courbe donnée en figure 1 représente la tension de surface de la composition selon l'invention une fois redissoute, comparée avec celle d'une solution comprenant seulement le tensioactif.

La courbe montre bien que les propriétés de tensions de surface sont conservées.

### EXEMPLE 2

### 1/ Préparation du tensioactif sec

On mélange 63,4 g de Rhodafac ARB 70 (mélange d'alkylphosphates acides éthoxylés - solution à 70 % poids dans l'eau - commercialisé par Rhodia Chimie) et 37 g d'ESA EP 796 ( copolymère acide maléique / acide acrylique (Mw ≈ 150000 g/mol - solution à 46,2 % poids dans l'eau - commercialisé par BASF).

On ajoute ensuite 15,1 g de soude (50 % poids) sous agitation et l'on sèche le mélange résultant, sous forme d'un film mince, à l'étuve pendant 12 heures à 75°C.

On obtient un solide cristallisé que l'on peut broyer.

La composition obtenue contient 68 % de Rhodafac ARB sous forme sèche.

### 2/ Préparation d'une formulation à base de glyphosate

On mélange 53,5 % de glyphosate (équivalent acide - 100 % de matière active) avec 21 % de sulfate d'ammonium et 25,5 % du tensioactif sec obtenu au point 1.

On ajoute ensuite 11, 5 ml d'eau pour 100 g de mélange ci-dessus et on extrude l'ensemble.

Les granulés sont ensuite séchés.

Il est à noter qu'il n'est pas possible d'extruder un mélange comprenant 44,4 % de glyphosate (équivalent acide - 100 % de matière active), 37,6 % de sulfate d'ammonium et 17,8 % de Rhodafac ARB 70 (solution à 70 % dans l'eau).

## Revendications

1. Composition se présentant sous une forme solide, comprenant :
• au moins un tensioactif à bas point de fusion,
• au moins un polymère choisi parmi :
(i) les polymères ou copolymères obtenus par polymérisation
□ d'au moins un monomère (I) porteur d'une ou plusieurs fonctions choisies parmi les suivantes : acide carboxylique sous forme acide ou salifiée, ou précurseur d'acide carboxylique, ou acide sulfonique, sous forme acide ou salifiée, et/ou
□ d'au moins un monomère (II) ester polyoxyalkyléné d'acide carboxylique éthyléniquement insaturé, et éventuellement
□ d'au moins un monomère (III), linéaire ou ramifié, monoéthyléniquement ou polyéthyléniquement insaturé, non ionique en C₃-C₁₂ ;
(ii) les polymères obtenus par polymérisation d'au moins un monomère (I) porteur d'une ou plusieurs fonctions choisies parmi les suivantes : acide carboxylique sous forme acide ou salifiée, ou précurseur d'acide carboxylique, ou acide sulfonique, sous forme acide ou salifiée, polymère comprenant en outre au moins un greffon hydrophobe, hydrocarboné, en C₄-C₃₀, saturé ou non, aromatique ou non, éventuellement interrompu par un ou plusieurs hétéroatomes ;
(iii) les polymères obtenus par polymérisation d'au moins un monomère (IV), linéaire ou ramifié, monoéthyléniquement ou polyéthyléniquement insaturé, porteur d'un ou plusieurs groupements hydroxyles ou précurseur de groupements hydroxyles, polymère comprenant en outre au moins un greffon hydrophobe, hydrocarboné, en C₄-C₃₀, saturé ou non, aromatique ou non, éventuellement interrompu par un ou plusieurs hétéroatomes ;
(iv) les polypeptides d'origine naturelle ou synthétique, comportant au moins un greffon hydrophobe, hydrocarboné, en C₄-C₃₀, saturé ou non, aromatique ou non, éventuellement interrompu par un ou plusieurs hétéroatomes ;
(v) les polysaccharides fortement dépolymérisés comportant au moins un greffon hydrophobe, hydrocarboné, en C₄-C₃₀, saturé ou non aromatique ou non, éventuellement interrompu par un ou plusieurs hétéroatomes.

2. Composition selon la revendication 1, **caractérisée en ce que** le rapport pondéral des concentrations entre le tensioactif à bas point de fusion et le polymère est compris entre 50 / 50 et 90 / 10.

3. Composition selon l'une quelconque des revendications 1 ou 2, **caractérisée en ce que** le polymère (i) est obtenu par polymérisation d'au moins un monomère de formule (I) (R¹)(R¹) C = C(R¹) - COOH ; formule dans laquelle les radicaux R¹, identiques ou différents, représentent un atome d'hydrogène, un radical hydrocarboné en C₁-C₁₀ comprenant éventuellement un groupement - COOH, un groupement - COOH ; ledit acide pouvant se trouver sous la forme d'un anhydride s'il comprend plusieurs fonctions carboxyliques.

4. Composition selon l'une quelconque des revendications précédentes, **caractérisée en ce que** le polymère (i) est obtenu par polymérisation d'au moins un monomère de formule (II)
CH₂=C(R²⁰)-C(O)-O-[CH(R²¹)CH(R²²)O]ₘ-[CH₂-CH₂O]ₙ - R²³
formule dans laquelle :
R²⁰ est un atome d'hydrogène ou un radical méthyle,
R²¹ et R²² représentent un atome d'hydrogène ou un radical alkyle contenant de 1 à 4 atomes de carbone, à la condition que l'un et l'autre ne soient pas simultanément un radical alkyle ou un atome d'hydrogène,
* R²³ est un radical alkyle, aryle, alkylaryle ou arylalkyle contenant de 1 à 30, de préférence de 6 à 30 atomes de carbone,
* n est compris entre 2 et 100, de préférence entre 6 et 100 et m est compris entre 0 et 50, sous réserve que n soit supérieur ou égal à m et leur somme comprise entre 2 et 100, de préférence entre 6 et 100 ; la position des blocs -CH(R²¹)CH(R²²)O- et -CH₂-CH₂O- pouvant être intervertie.

5. Composition selon l'une quelconque des revendications précédentes, **caractérisée en ce que** le polymère (i) est obtenu par polymérisation d'au moins un monomère de formule (III)
(R³¹)(R³²) C = CH₂
formule dans laquelle :
* les radicaux R³¹ et R³², identiques ou différents, représentent un radical hydrocarboné, linéaire ou ramifié, en C₁ - C₁₀, ou un atome d'hydrogène, à la condition que R³¹ et R³², ne représentent pas simultanément un atome d'hydrogène ;
* de plus :
- si R³¹ est un atome d'hydrogène, alors R³²,représente un groupement -COOR^{a}, -OCOR^{a}, -C₆H₄R^{b}, -CONHR^{a} ou -CON(R^{a})₂
- si R³¹ est un radical méthyle, alors R³²,représente un groupement -COOR^{a}, -C₆H₄R^{b}, -CONHR^{a} ou -CON(R^{a})₂,
formules dans lesquelles R^{a}, identiques ou non, représentent un groupement alkyle en C₁-C₁₀ ou un groupement hydroxyalkyle en C₁-C₁₀, R^{b} représente un atome d'hydrogène, de chlore, de brome ou un groupement alkyle en C₁-C₄.

6. Composition selon l'une quelconque des revendications précédentes, **caractérisée en ce que** le polymère (i) est obtenu par polymérisation d'au moins un monomère de formule (I) et au moins un monomère de formule (II), ou d'au moins un monomère de formule (I) et au moins un monomère de formule (III).

7. Composition selon l'une quelconque des revendications précédentes, **caractérisée en ce que** le monomère (I) du polymère (i) ou (ii) est un acide monocarboxylique ou polycarboxylique, correspondant à la formule suivante :
(R¹¹)HC = C (R¹²) COOH
formule dans laquelle :
* R¹¹ représente un atome d'hydrogène, un groupement -COOH ou un groupement -(CH₂)ₙ - COOH dans lequel n est compris entre 1 et 4, un radical alkyle en C₁-C₄ ;
* R¹² représente un atome d'hydrogène, en groupement -(CH₂)ₘ - COOH dans lequel m est compris entre 1 et 4, un radical alkyle en C₁-C₄ ;
ledit acide pouvant se trouver sous la forme d'un anhydride s'il comprend plusieurs fonctions carboxyliques.

8. Composition selon la revendication précédente, **caractérisée en ce que** le monomère (I) du polymère (i) ou (ii) est tel que le radical R¹¹ représente un atome d'hydrogène, un groupement -COOH ou -(CH₂)-COOH, un radical méthyle, et le radical R¹² représente un atome d'hydrogène, un groupement -CH₂-COOH ou un radical méthyle.

9. Composition selon l'une quelconque des revendications précédentes, **caractérisée en ce que** le monomère (I) du polymère (i) ou (ii) est choisi parmi les acides ou anhydrides acrylique, méthacrylique, citraconique maléique, fumarique, itaconique, crotonique.

10. Composition selon l'une quelconque des revendications précédentes, **caractérisée en ce que** le monomère (II) est tel que R²³ est un radical alkyle contenant de 8 à 30 atomes de carbone, un radical phényle substitué par un à trois groupements 1-phényléthyles, un radical alkylphényle dont le radical alkyle contient de 8 à 16 atomes de carbone.

11. Composition selon l'une quelconque des revendications précédentes, **caractérisée en ce que** le monomère (III) est choisi parmi l'acrylate d'éthyle, le méthacrylate d'éthyle, l'acrylate de 2-éthylhexyle, l'acrylate de butyle, le méthacrylate de butyle, l'acrylate de 2-hydroxyéthyle, le méthacrylate de 2-hydroxybutyle, l'acétate de vinyle, le butyrate de vinyle, le caproate de vinyle, le styrène, le vinyltoluène, le ter-butylstyrène, l'hydroxystyrène, l'isopropylstyrène, le p-chlorostyrène, les (méth)acrylamides N-substitués ou N,N'-disubstitués, le propylène, le 1-butène, l'isobutylène, le n-1-pentène, le 2-méthyl 1-butène, le n-1-hexène, le 2-méthyl 1-pentène, le 4-méthyl 1-pentène, le 2-éthyl 1-butène, le diisobutylène (ou 2,4,4-triméthyl 1-pentène), le 2-méthyl 3,3-diméthyl 1-pentène.

12. Composition selon l'une quelconque des revendications précédentes, **caractérisée en ce que** le polymère (ii) peut comprendre en outre un ou plusieurs motifs correspondant à des monomères de formule (III).

13. Composition selon l'une quelconque des revendications précédentes, **caractérisée en ce que** le greffon est choisi parmi les radicaux aliphatiques, cycliques, aromatiques, alkylaromatiques, arylaliphatiques, comprenant 4 à 30 atomes de carbone et pouvant être interrompus par un ou plusieurs hétéroatomes, de préférence l'oxygène.

14. Composition selon l'une quelconque des revendications précédentes, **caractérisée en ce que** le polymère (i) est issu de la polymérisation de l'anhydride maléique et du 2,4,4 triméthyl-1-pentène.

15. Composition selon l'une quelconque des revendications précédentes, **caractérisée en ce que** le polymère (iii) est issu de la polymérisation d'un monomère (IV) correspondant plus particulièrement à la formule suivante :
(R⁵)(R⁵) C = CH₂ (IV)
formule dans laquelle les radicaux R⁵, identiques ou différents, représentent un radical, linéaire ou ramifié, en C₁-C₁₀, l'un d'eux au moins étant un groupement hydroxyle ou précurseur d'un groupement hydroxyle, comme les fonctions esters pour lesquelles l'alcool est rattaché au monomère.

16. Composition selon l'une quelconque des revendications précédentes, **caractérisée en ce que** les polypeptides (iv) sont choisis parmi les homopolymères-et copolymères dérivés au moins de l'acide aspartique, glutamique.

17. Composition selon l'une quelconque des revendications précédentes **caractérisée en ce que** les polysaccharides (v) sont choisis parmi les composés fortement dépolymérisés obtenus à partir de dextran, d'amidon, de maltodextrine, de gomme xanthane, et de galactomannanes, tels que le guar ou la caroube.

18. Composition selon l'une quelconque des revendications précédentes, **caractérisée en ce que** le tensioactif à bas point de fusion est choisi parmi :
- les alcools gras polyoxyalkylénés
- les triglycérides polyoxyalkylénés
- les esters d'acides gras polyoxyalkylénés
- les esters de sorbitan polyoxyalkylénés
- les amides d'acides gras polyoxyalkylénés
- les amines grasses polyoxyalkylénées
- les amidoamines polyoxyalkyénées
- les di(phényl-1 éthyl) phénols polyoxyalkylénés
- les tri(phényl-1 éthyl) phénols polyoxyalkylénés
- les alkylphénols polyoxyalkylénés
- les produits résultant de la condensation de l'oxyde d'éthylène ou de l'oxyde de propylène avec l'éthylènediamine
- les hydrocarbures terpéniques alcoxylés tels que les dérivés d'α- ou de β-pinènes polyoxyalkylénés
- les alkylpolyglycosides pouvant être obtenus par condensation du glucose avec des alcools gras primaires présentant un groupe alkyle en C₄-C₂₀ ainsi qu'un nombre moyen de motifs glucose de l'ordre 0,5 à 3 par mole d'alkylpolyglycoside ;
- Les alcools gras polyoxyalkylénés sulfatés ou phosphatés
- les di(phényl-1 éthyl) phénols polyoxyalkylénés sulfatés ou phosphatés
- les tri(phényl-1 éthyl) phénols polyoxyalkylénés sulfatés ou phosphatés
- les alkylphénols polyoxyalkylénés sulfatés ou phosphatés.

19. Composition selon l'une quelconque des revendications précédentes, **caractérisée en ce que** le tensioactif à bas point de fusion présente un point de fusion inférieur à 80°C, plus particulièrement, inférieur à 50°C.

20. Procédé de préparation de la composition telle que définie à l'une quelconque des revendications 1 à 19, **caractérisé en ce que** l'on effectue les étapes suivantes :
- on prépare une solution aqueuse comprenant au moins un tensioactif à bas point de fusion, au moins un polymère,
- on sèche la solution ainsi obtenue.

21. Procédé selon la revendication précédente, **caractérisé en ce que** l'on prépare une solution comprenant 10 à 99 % en poids de matières sèches, de préférence 30 à 80 % en poids.

22. Procédé selon l'une quelconque des revendications 19 à 21, **caractérisé en ce que** l'on effectue un séchage par atomisation

23. Procédé selon l'une quelconque des revendications 19 à 21, **caractérisé en ce que** l'on effectue un séchage au moyen d'un sécheur comprenant un tambour tournant raclé.

24. Utilisation de la composition selon l'une quelconque des revendications 1 à 19 ou obtenue selon l'une des revendications 20 à 23, en tant qu'élément constitutif de formulations phytosanitaires.

## Patentansprüche

1. Zusammensetzung, die in fester Form vorliegt, umfassend:
- wenigstens ein Tensid mit niedrigem Schmelzpunkt,
- wenigstens ein Polymer, gewählt aus:
(i) Polymeren oder Copolymeren, erhalten durch Polymerisation von
- wenigstens einem Monomeren (I), Träger von einer oder mehreren funktionellen Gruppen, die aus den folgenden gewählt sind: Carbonsäure in Säureform oder in Salzform, oder Carbonsäurevorläufer, oder Sulfonsäure, in Säureform oder Salzform; und/oder
- wenigstens einem Monomeren (II), einem Polyoxyalkylen-Ester einer ethylenisch ungesättigten Carbonsäure, und gegebenenfalls
- wenigstens einem Monomeren (III), linear oder verzweigt, monoethylenisch oder polyethylenisch ungesättigt, nicht-ionisch mit C₃-C₁₂;
(ii) Polymeren, erhalten durch Polymerisation von wenigstens einem Monomeren (I), Träger von einer oder mehreren funktionellen Gruppen, die aus den folgenden gewählt sind: Carbonsäure in Säureform oder Salzform, oder Carbonsäurevorläufer, oder Sulfonsäure, in Säureform oder Salzform; wobei das Polymer außerdem wenigstens einen hydrophoben Kohlenwasserstoff-Pfropf mit C₄-C₃₀, gesättigt oder ungesättigt, aromatisch oder nicht-aromatisch, gegebenenfalls durch ein oder mehrere Heteroatome unterbrochen, umfasst;
(iii) Polymeren, erhalten durch Polymerisation von wenigstens einem Monomeren (IV), linear oder verzweigt, monoethylenisch oder polyethylenisch ungesättigt, Träger von einer oder mehreren Hydroxylgruppen oder Hydroxylgruppenvorläufer, wobei das Polymer außerdem wenigstens einen hydrophoben Kohlenwasserstoff-Pfropf mit C₄-C₃₀, gesättigt oder ungesättigt, aromatisch oder nicht-aromatisch, gegebenenfalls durch ein oder mehrere Heteroatome unterbrochen, umfasst;
(iv) Polypeptiden natürlichen oder synthetischen Ursprungs, umfassend wenigstens einen hydrophoben Kohlenwasserstoff-Pfropf mit C₄-C₃₀, gesättigt oder ungesättigt, aromatisch oder nicht-aromatisch, gegebenenfalls durch ein oder mehrere Heteroatome unterbrochen;
(v) stark depolymerisierten Polysacchariden, umfassend wenigstens einen hydrophoben Kohlenwasserstoff-Pfropf mit C₄-C₃₀, gesättigt oder ungesättigt, aromatisch oder nicht-aromatisch, gegebenenfalls durch ein oder mehrere Heteroatome unterbrochen.

2. Zusammensetzung gemäß Anspruch 1,
**dadurch gekennzeichnet, dass** das Gewichtsverhältnis der Konzentrationen zwischen dem Tensid mit niedrigem Schmelzpunkt und dem Polymer zwischen 50 / 50 und 90 / 10 liegt.

3. Zusammensetzung gemäß einem der Ansprüche 1 oder 2,
**dadurch gekennzeichnet, dass** das Polymer (i) durch Polymerisation von wenigstens einem Monomer der Formel (I) (R¹)(R¹)C=C(R¹)-COOH erhalten wird, wobei in der Formel die Reste R¹, die gleich oder verschieden sind, für ein Wasserstoffatom, für einen Kohlenwasserstoffrest mit C₁-C₁₀, gegebenenfalls eine Gruppe -COOH umfassend, für eine Gruppe -COOH stehen, wobei die Säure in Form eines Anhydrids vorliegen kann, wenn sie mehrere Carboxylfunktionen aufweist.

4. Zusammensetzung gemäß einem der vorhergehenden Ansprüche,
**dadurch gekennzeichnet, dass** das Polymer (i) durch Polymerisation von wenigstens einem Monomeren der Formel (II) CH₂=C(R²⁰)-C(O)-O-[CH(R²¹)CH(R²²)O]ₘ-[CH₂-CH₂O]ₙ-R²³ erhalten wird, wobei in der Formel:
- R²⁰ für ein Wasserstoffatom oder einen Methylrest steht,
- R²¹ und R²² für ein Wasserstoffatom oder einen Alkylrest mit 1 bis 4 Kohlenstoffatomen stehen, unter der Bedingung, dass der eine und der andere Rest nicht gleichzeitig einen Alkylrest oder ein Wasserstoffatom darstellen;
- R²³ für einen Alkyl-, Aryl-, Alkylaryl- oder Arylalkylrest mit 1 bis 30, bevorzugt mit 6 bis 30 Kohlenstoffatomen steht;
- n zwischen 2 und 100 liegt, bevorzugt zwischen 6 und 100 und m zwischen 0 und 50 liegt, unter dem Vorbehalt, dass n größer oder gleich m ist und deren Summe zwischen 2 und 100, bevorzugt zwischen 6 und 100, liegt; wobei die Position der Blöcke -CH(R²¹)CH(R²²)O- und -CH₂-CH₂O- vertauscht werden kann.

5. Zusammensetzung gemäß einem der vorhergehenden Ansprüche,
**dadurch gekennzeichnet, dass** das Polymer (i) durch Polymerisation von wenigstens einem Monomeren der Formel (III) (R³¹)(R³²)C=CH₂ hergestellt ist, wobei in der Formel
- die Reste R³¹ und R³² , die gleich oder verschieden sind, für einen Kohlenwasserstoffrest, linear oder verzweigt, mit C₁-C₁₀ oder ein Wasserstoffatom stehen, unter der Bedingung, dass R³¹ und R³² nicht gleichzeitig ein Wasserstoffatom darstellen;
- ferner:
- wenn R³¹ für ein Wasserstoffatom steht, dann steht R³² für eine Gruppe -COOR^{a}, -OCOR^{a}, -C₆H₄R^{b}, -CONHR^{a} oder ―CON(R^{a})₂,
- wenn R³¹ für einen Methylrest steht, dann steht R³² für eine Gruppe ―COOR^{a}, -C₆H₄R^{b}, -CONHR^{a} oder ―CON(R^{a})₂,
Formeln, in denen R^{a}, gleich oder verschieden, für eine Alkylgruppe mit C₁-C₁₀ oder eine Hydroxyalkylgruppe mit C₁-C₁₀ stehen, R^{b} für ein Wasserstoffatom, Chloratom, Bromatom oder eine Alkylgruppe mit C₁-C₄ steht.

6. Zusammensetzung gemäß einem der vorhergehenden Ansprüche,
**dadurch gekennzeichnet, dass** das Polymer (i) durch Polymerisation von wenigstens einem Monomeren der Formel (I) und wenigstens einem Monomeren der Formel (II), oder wenigstens einem Monomeren der Formel (I) und wenigstens einem Monomeren der Formel (III) erhalten wird.

7. Zusammensetzung gemäß einem der vorhergehenden Ansprüche,
**dadurch gekennzeichnet, dass** das Monomer (I) des Polymeren (i) oder (ii) eine Monocarbonsäure oder Polycarbonsäure ist, die der folgenden Formel entspricht:
(R¹¹)HC=C(R¹²)COOH,
in der:
- R¹¹ für ein Wasserstoffatom, eine Gruppe ―COOH oder eine Gruppe ―(CH₂)ₙ-COOH, in der n zwischen 1 und 4 ist, oder einen Alkylrest mit C₁-C₄ steht;
- R¹² für ein Wasserstoffatom, eine Gruppe ―(CH₂)ₘ-COOH, in der m zwischen 1 und 4 ist, oder einen Alkylrest mit C₁-C₄ steht;
wobei die Säure in Form eines Anhydrids vorliegen kann, wenn sie mehrere Carboxylfunktionen umfasst.

8. Zusammensetzung gemäß dem vorhergehenden Anspruch,
**dadurch gekennzeichnet, dass** das Monomer (I) des Polymeren (i) oder (ii) derart ist, dass der Rest R¹¹ für ein Wasserstoffatom, eine Gruppe ―COOH oder ―(CH₂)-COOH, oder einen Methylrest steht, und der Rest R¹² für ein Wasserstoffatom, eine Gruppe - CH₂-COOH oder einen Methylrest steht.

9. Zusammensetzung gemäß einem der vorhergehenden Ansprüche,
**dadurch gekennzeichnet, dass** das Monomer (I) des Polymeren (i) oder (ii) aus Acrylsäure, Methacrylsäure, Citraconsäure, Maleinsäure, Fumarsäure, Itaconsäure, Crotonsäure, oder Anhydriden davon gewählt ist.

10. Zusammensetzung gemäß einem der vorhergehenden Ansprüche,
**dadurch gekennzeichnet, dass** das Monomer (II) derart ist, dass R²³ für einen Alkylrest mit 8 bis 30 Kohlenstoffatomen, einen Phenylrest, der mit 1 bis 3 1-Phenylethylgruppen substituiert ist; einen Alkylphenylrest, dessen Alkylrest 8 bis 16 Kohlenstoffatome enthält, steht.

11. Zusammensetzung gemäß einem der vorhergehenden Ansprüche,
**dadurch gekennzeichnet, dass** das Monomer (III) aus Acrylsäureethylester, Methacrylsäureethylester, 2-Ethylhexylester von Acrylsäure, Acrylsäurebutylester, Methacrylsäurebutylester, 2-Hydroxyethylester von Acrylsäure, 2-Hydroxybutylester von Methacrylsäure, Vinylacetat, Vinylbutyrat, Vinylcaproat, Styrol, Vinyltoluol, ter-Butylstyrol, Hydroxystyrol, Isopropylstyrol, p-Chlorstyrol, N-substituierte oder N,N'disubstituierte (Meth)acrylamide, Propylen, 1-Buten, Isobuten, n-1-Penten, 2-Methyl-1-buten, n-1-Hexen, 2-Methyl-1-penten, 4-Methyl-1-penten, 2-Ethyl-1-buten, Diisobutylen (oder 2,4,4-Trimethyl-1-penten), 2-Methyl-3,3-dimethyl-1-penten gewählt ist.

12. Zusammensetzung gemäß einem der vorhergehenden Ansprüche,
**dadurch gekennzeichnet, dass** das Polymer (ii) außerdem ein oder mehrere Motive umfassen kann, die Monomeren der Formel (III) entsprechen.

13. Zusammensetzung gemäß einem der vorhergehenden Ansprüche,
**dadurch gekennzeichnet, dass** der Pfropf aus aliphatischen, cyclischen, aromatischen, alkylaromatischen, arylaliphatischen Resten gewählt ist, die 4 bis 30 Kohlenstoffatome umfassen und durch ein oder mehrere Heteroatome, bevorzugt Sauerstoff, unterbrochen sein können.

14. Zusammensetzung gemäß einem der vorhergehenden Ansprüche,
**dadurch gekennzeichnet, dass** das Polymer (i) aus der Polymerisation von Maleinsäureanhydrid und 2,4,4-Trimethyl-1-penten stammt.

15. Zusammensetzung gemäß einem der vorhergehenden Ansprüche,
**dadurch gekennzeichnet, dass** das Polymer (iii) aus der Polymerisation eines Monomeren (IV) stammt, das insbesondere der folgenden Formel entspricht:
(R⁵)(R⁵)C=CH₂ (IV)
worin die Reste R⁵, die glelch oder verschieden sein können, für einen linearen oder verzweigten Rest mit C₁-C₁₀ stehen, wobei wenigstens einer der beiden Reste eine Hydroxylgruppe oder ein Vorläufer einer Hydroxylgruppe ist, als die Esterfunktionen, für die der Alkohol am Monomer gebunden ist.

16. Zusammensetzung gemäß einem der vorhergehenden Ansprüche,
**dadurch gekennzeichnet, dass** die Polypeptide (iv) aus Homopolymeren und Copolymeren, die mindestens von Asparaginsäure, Glutaminsäure abgeleitet sind, gewählt sind.

17. Zusammensetzung gemäß einem der vorhergehenden Ansprüche,
**dadurch gekennzeichnet, dass** die Polysaccharide (v) aus stark depolymerisierten Verbindungen gewählt sind, die ausgehend von Dextran, Amidon, Maltodextrin, Xanthangummi, Galactomannanen wie Guar oder Johannisbrot erhalten werden.

18. Zusammensetzung gemäß einem der vorhergehenden Ansprüche,
**dadurch gekennzeichnet, dass** das Tensid mit niedrigem Schmelzpunkt gewählt wird aus:
- polyoxyalkylenierten Fettalkoholen
- polyoxyalkylenierten Triglyceriden
- polyoxyalkylenierten Fettsäureestern
- polyoxyalkylenierten Sorbitanestem
- polyoxyalkylenierten Fettsäureamiden
- polyoxyalkylenierten Fettaminen
- polyoxyalkylenierten Amidoaminen
- polyoxyalkylenierten Di(Phenyl-1-ethyl)Phenolen
- polyoxyalkylenierten Tri(Phenyl-1-ethyl)Phenolen
- polyoxyalkylenierten Alkylphenolen
- Produkten, die aus der Kondensation von Ethylenoxid oder Propylenoxid mit Ethylendiamin stammen
- alkoxylierten Terpenkohlenwasserstoffen wie Derivate von polyoxyalkylenierten α-oder β-Pinenen
- Alkylpolyglycosiden, die durch Kondensation von Glucose mit primären Fettalkoholen erhalten werden können, die eine Alkylgruppe mit C₄-C₂₀, wie auch eine durchschnittliche Anzahl von Glucosemotiven in der Größenordnung von 0,5 bis 3 pro Mol Alkylpolyglycosid aufweisen,
- sulfatierten oder phosphatierten polyoxyalkylenierten Fettalkoholen
- sulfatierten oder phosphatierten polyoxyalkylenierten Di(Phenyl-1-ethyl)Phenolen
- sulfatierten oder phosphatierten polyoxyalkylenierten Tri(Phenyl-1-ethyl)Phenolen
- sulfatierten oder phosphatierten polyoxyalkylenierten Alkylphenolen.

19. Zusammensetzung gemäß einem der vorhergehenden Ansprüche, **dadurch gekennzeichnet, dass** das Tensid mit niedrigem Schmelzpunkt einen Schmelzpunkt unterhalb von 80 °C aufweist, insbesondere unterhalb von 50 °C.

20. Verfahren zur Herstellung der Zusammensetzung, wie sie in einem der Ansprüche 1 bis 19 definiert worden ist,
**dadurch gekennzeichnet, dass** die folgenden Stufen durchgeführt werden:
- man stellt eine wässrige Lösung her, die wenigstens ein Tensid mit niedrigem Schmelzpunkt und wenigstens ein Polymer umfasst,
- man trocknet die so erhaltene Lösung.

21. Verfahren gemäß dem vorhergehenden Anspruch,
**dadurch gekennzeichnet, dass** man eine Lösung herstellt, die 10 bis 99 Gew.-% Trockensubstanz umfasst, bevorzugt 30 bis 80 Gew.-%.

22. Verfahren gemäß einem der Ansprüche 19 bis 21,
**dadurch gekennzeichnet, dass** eine Sprühtrocknung durchgeführt wird.

23. Verfahren gemäß einem der Ansprüche 19 bis 21,
**dadurch gekennzeichnet, dass** eine Trocknung mittels eines Trockners, der eine Drehtrommel umfasst, durchgeführt wird.

24. Verwendung der Zusammensetzung gemäß einem der Ansprüche 1 bis 19 oder der Zusammensetzung, die nach einem der Ansprüche 20 bis 23 erhalten wird, als Bestandteil von Pflanzenschutzformulierungen.

## Claims

1. A composition in a solid form, comprising:
• at least one low-melting surfactant,
• at least one polymer chosen from:
(i) polymers or copolymers obtained by polymerization
o of at least one monomer (I) bearing one or more functions chosen from the following: carboxylic acid in acid or salified form, or carboxylic acid precursor, or sulfonic acid, in acid or salified form, and/or
o of at least one polyoxyalkylenated ethylenically unsaturated carboxylic acid ester monomer (II), and optionally
o of at least one monoethylenically or polyethylenically unsaturated, nonionic, linear or branched C₃-C₁₂ monomer (III);
(ii) polymers obtained by polymerization of at least one monomer (I) bearing one or more functions chosen from the following: carboxylic acid in acid or salified form, or carboxylic acid precursor, or sulfonic acid, in acid or salified form, the polymer also comprising at least one saturated or unsaturated, aromatic or nonaromatic C₄-C₃₀ hydrocarbon-based hydrophobic graft, optionally interrupted with one or more hetero atoms;
(iii) polymers obtained by polymerization of at least one monoethylenically or polyethylenically unsaturated linear or branched monomer (IV) bearing one or more hydroxyl groups or hydroxyl group precursor, the polymer also comprising at least one saturated or unsaturated, aromatic or nonaromatic C₄-C₃₀ hydrocarbon-based hydrophobic graft, optionally interrupted with one or more hetero atoms;
(iv) polypeptides of natural or synthetic origin comprising at least one saturated or unsaturated, aromatic or nonaromatic C₄-C₃₀ hydrocarbon-based hydrophobic graft, optionally interrupted with one or more hetero atoms;
(v) highly depolymerized polysaccharides comprising at least one saturated or unsaturated, aromatic or nonaromatic C₄-C₃₀ hydrocarbon-based hydrophobic graft, optionally interrupted with one or more hetero atoms.

2. The composition as claimed in claim 1, **characterized in that** the weight ratio of the concentrations between the low-melting surfactant and the polymer is between 50/50 and 90/10.

3. The composition as claimed in either of claims 1 and 2, **characterized in that** the polymer (i) is obtained by polymerization of at least one monomer of formula (1) (R¹)(R¹)C=C(R¹)-COOH; in which formula the radicals R¹, which may be identical or different, represent a hydrogen atom, a C₁-C₁₀ hydrocarbon-based radical optionally comprising a -COOH group, or a -COOH group; said acid possibly being in the form of an anhydride if it comprises several carboxylic functions.

4. The composition as claimed in any one of the preceding claims, **characterized in that** the polymer (i) is obtained by polymerization of at least one monomer of formula (II) CH₂=C(R²⁰)-C(O)-O-[CH(R²¹)CH(R²²)O]ₘ-[CH₂-CH₂O]ₙ-R²³ in which formula:
R²⁰ is a hydrogen atom or a methyl radical,
R²¹ and R²² represent a hydrogen atom or an alkyl radical containing from 1 to 4 carbon atoms, on condition that they are not both simultaneously an alkyl radical or a hydrogen atom;
*R²³ is an alkyl, aryl, alkylaryl or arylalkyl radical containing from 1 to 30 and preferably from 6 to 30 carbon atoms,
*n is between 2 and 100 and preferably between 6 and 100 and m is between 0 and 50, with the proviso that n is greater than or equal to m and their sum is between 2 and 100 and preferably between 6 and 100; the position of the blocks -CH(R²¹)CH(R²²)O- and -CH₂-CH₂O- possibly being inverted.

5. The composition as claimed in any one of the preceding claims, **characterized in that** the polymer (i) is obtained by polymerization of at least one monomer of formula (III) (R³¹)(R³²)C=CH₂
in which formula:
* the radicals R³¹ and R³², which may be identical or different, represent a linear or branched C₁-C₁₀ hydrocarbon-based radical or a hydrogen atom, on condition that R³¹ and R³² do not simultaneously represent a hydrogen atom;
* furthermore:
- if R³¹ is a hydrogen atom, then R³² represents a group -COOR^{a}, -OCOR^{a}, -C₆H₄R^{b}, -CONHR^{a} or -CON(R^{a})₂,
- if R³¹ is a methyl radical, then R³² represents a group -COOR^{a}, -C₆H₄R^{b}, -CONHR^{a} or -CON(R^{a})₂,
in which formulae R^{a}, which may be identical or different, represent a C₁-C₁₀ alkyl group or a C₁-C₁₀ hydroxyalkyl group, R^{b} represents a hydrogen, chlorine or bromine atom or a C₁-C₄ alkyl group.

6. The composition as claimed in any one of the preceding claims, **characterized in that** the polymer (i) is obtained by polymerization of at least one monomer of formula (I) and at least one monomer of formula (II), or of at least one monomer of formula (I) and at least one monomer of formula (III).

7. The composition as claimed in any one of the preceding claims, **characterized in that** the monomer (I) of the polymer (i) or (ii) is a monocarboxylic or polycarboxylic acid corresponding to the following formula:
(R¹¹)HC=C(R²¹)COOH
in which formula:
* R¹¹ represents a hydrogen atom, a -COOH group or a group -(CH₂)ₙ-COOH in which n is between 1 and 4, or a C₁-C₄ alkyl radical;
* R¹² represents a hydrogen atom, a group -(CH₂)ₘ-COOH in which m is between 1 and 4, or a C₁-C₄ alkyl radical;
said acid possibly being in the form of an anhydride if it comprises several carboxylic functions.

8. The composition as claimed in the preceding claim, **characterized in that** the monomer (I) of the polymer (i) or (ii) is such that the radical R¹¹ represents a hydrogen atom, a -COOH or -(CH₂)-COOH group, a methyl radical, and the radical R¹² represents a hydrogen atom, a -CH₂-COOH group or a methyl radical.

9. The composition as claimed in any one of the preceding claims, **characterized in that** the monomer (I) of the polymer (i) or (ii) is chosen from acrylic, methacrylic, citraconic, maleic, fumaric, itaconic and crotonic acid or anhydride.

10. The composition as claimed in any one of the preceding claims, **characterized in that** the monomer (II) is such that R²³ is an alkyl radical containing from 8 to 30 carbon atoms, a phenyl radical substituted with one to three 1-phenylethyl groups, or an alkylphenyl radical in which the alkyl radical contains from 8 to 16 carbon atoms.

11. The composition as claimed in any one of the preceding claims, **characterized in that** the monomer (III) is chosen from ethyl acrylate, ethyl methacrylate, 2-ethylhexyl acrylate, butyl acrylate, butyl methacrylate, 2-hydroxyethyl acrylate, 2-hydroxybutyl methacrylate, vinyl acetate, vinyl butyrate, vinyl caproate, styrene, vinyltoluene, tert-butylstyrene, hydroxystyrene, isopropylstyrene, p-chlorostyrene, N-substituted or N,N'-disubstituted (meth)acrylamides, propylene, 1-butene, isobutylene, n-1-pentene, 2-methyl-1-butene, n-1-hexene, 2-methyl-1-pentene, 4-methyl-1-pentene, 2-ethyl-1-butene, diisobutylene (or 2,4,4-trimethyl-1-pentene) and 2-methyl-3,3-dimethyl-1-pentene.

12. The composition as claimed in any one of the preceding claims, **characterized in that** the polymer (ii) may also comprise one or more units corresponding to monomers of formula (III).

13. The composition as claimed in any one of the preceding claims, **characterized in that** the graft is chosen from aliphatic, cyclic, aromatic, alkylaromatic and arylaliphatic radicals containing 4 to 30 carbon atoms and possibly being interrupted with one or more hetero atoms, preferably oxygen.

14. The composition as claimed in any one of the preceding claims, **characterized in that** the polymer (i) is derived from the polymerization of maleic anhydride and of 2,4,4-trimethyl-1-pentene.

15. The composition as claimed in any one of the preceding claims, **characterized in that** the polymer (iii) is derived from the polymerization of a monomer (IV) corresponding more particularly to the following formula:
(R⁵)(R⁵)C=CH₂ (IV)
in which formula the radicals R⁵, which may be identical or different, represent a linear or branched C₁-C₁₀ radical, at least one of them being a hydroxyl group or a precursor of a hydroxyl group, for instance ester functions for which the alcohol is attached to the monomer.

16. The composition as claimed in any one of the preceding claims, **characterized in that** the polypeptides (iv) are chosen from homopolymers and copolymers derived from at least aspartic acid or glutamic acid.

17. The composition as claimed in any one of the preceding claims, **characterized in that** the polysaccharides (v) are chosen from highly depolymerized compounds obtained from dextran, from starch, from maltodextrin, from xanthan gum and from galactomannans, such as guar or carob.

18. The composition as claimed in any one of the preceding claims, **characterized in that** the low-melting surfactant is chosen from:
- polyoxyalkylenated fatty alcohols
- polyoxyalkylenated triglycerides
- polyoxyalkylenated fatty acid esters
- polyoxyalkylenated sorbitan esters
- polyoxyalkylenated fatty acid amides
- polyoxyalkylenated fatty amines
- polyoxyalkylenated amido amines
- polyoxyalkylenated bis(1-phenylethyl)phenols
- polyoxyalkylenated tris(1-phenylethyl)phenols
- polyoxyalkylenated alkylphenols
- products resulting from the condensation of ethylene oxide or of propylene oxide with ethylenediamine
- alkoxylated terpenic hydrocarbons such as polyoxyalkylenated α- or β-pinene derivatives
- alkylpolyglycosides which may be obtained by condensation of glucose with primary fatty alcohols containing a C₄-C₂₀ alkyl group and also an average number of glucose units of about 0.5 to 3 per mole of alkylpolyglycoside;
- sulfated or phosphated polyoxyalkylenated fatty alcohols
- sulfated or phosphated polyoxyalkylenated bis(1-phenylethyl)phenols
- sulfated or phosphated polyoxyalkylenated tris(1-phenylethyl)phenols
- sulfated or phosphated polyoxyalkylenated alkylphenols.

19. The composition as claimed in any one of the preceding claims, **characterized in that** the low-melting surfactant has a melting point of less than 80°C and more particularly less than 50°C.

20. A process for preparing the composition as defined in any one of claims 1 to 19, **characterized in that** the following steps are carried out:
- an aqueous solution comprising at least one low-melting surfactant and at least one polymer is prepared,
- the solution thus obtained is dried.

21. The process as claimed in the preceding claim, **characterized in that** a solution comprising 10% to 99% by weight of solids, preferably 30% to 80% by weight, is prepared.

22. The process as claimed in any one of claims 19 to 21, **characterized in that** a drying operation by spraying is carried out.

23. The process as claimed in any one of claims 19 to 21, **characterized in that** a drying operation is carried out using a dryer comprising a scraped rotary drum.

24. The use of the composition as claimed in any one of claims 1 to 19 or obtained as claimed in one of claims 20 to 23, as a constituent of plant-protection formulations.
